# EUROPÄISCHE PATENTSCHRIFT

(11) **EP 0 821 530 B1**
(45) Veröffentlichungstag und Bekanntmachung des Hinweises auf die Patenterteilung: **07.04.2004**
(21) Anmeldenummer: 97111986.2
(22) Anmeldetag: 15.07.1997
(51) Int. Cl.: H04N 7/18

(54) **System zur Wiedergabe von Ton- und/oder Videosignalen und zur Steuerung von elektronischen Geräten in verschiedenen Räumen einer Wohnung oder in einem Haus**
System for reproducing audio and/or video signals and for controlling electronic devices in several rooms within an appartment or a house
Système pour la reproduction de signaux audio et/ou vidéo et pour la commande de dispositifs électroniques dans plusieurs pièces d'une maison

(30) Priorität: 23.07.1996 DE 19629773
(43) Veröffentlichungstag der Anmeldung: 28.01.1998
(73) Patentinhaber: LOEWE OPTA GmbH, 96317 Kronach (DE)
(72) Erfinder: Ruelberg, Klaus, Dr., 96317 Kronach (DE)

(56) Entgegenhaltungen:
- US-A- 4 386 436
- US-A- 4 959 713
- US-A- 5 428 388
- HANS SELMAYR: "Türfernsehanlagen" FUNKSCHAU, Bd. 52, Nr. 8, April 1980, Seiten 63-66, XP002094756 München, DE

## Beschreibung

Die Erfindung betrifft ein System zur Wiedergabe von Ton- und/oder Videosignalen und zur Steuerung von elektronischen Geräten in verschiedenen Räumen einer Wohnung oder in einem Haus.

Sowohl in Wohnungseinheiten, z.B. in einem Einfamilienhaus oder in einer Etagenwohnung, als auch in beruflich genutzten Gebäudeeinheiten, wie Büros, besteht oftmals der Wunsch, zentral empfangene Informationen parallel dazu auch in anderen Räumen darbieten zu können. Dies trifft beispielsweise für den Rundfunkempfang oder den Empfang von Fernsehsignalen, gleich ob sie terrestrisch verteilt oder über Satellit empfangen werden, zu. Darüber hinaus besteht aber auch das Bedürfnis, Überwachungsfunktionen oder Steuerfunktionen von verschiedenen Geräten in dieser Einheit zentral durchzuführen oder aus einem Raum heraus, in dem sich der Benutzer gerade befindet.

Aus der DE 24 50 200 B2 ist eine Anlage zur Anmeldung und Identifizierung von Besuchern unter Verwendung eines Gemeinschaftsantennen- oder Kabelfernsehempfangssystems, bei dem die Fernsehsignale über Fernsehsignalleitungen übermittelt werden, sowie unter Verwendung einer Hausgegensprechanlage mit Besuchertelefon und einem internen Wählschalter zum Anwählen der Teilnehmerstationen bekannt. Die Besonderheit dieser Anlage besteht darin, daß auf das Besuchertelefon eine Fernsehkamera gerichtet ist, die beim Betätigen des Besuchertelefons die aufgenommenen Bildsignale moduliert einem Mischer der Gemeinschaftsantennenanlage zuführt, so daß diese Bildsignale über die Fernsehsignalleitungen und über ein Steuergerät an einen Monitor der vom Besuchertelefon angerufenen Teilnehmerstation gelangen. Beim Betätigen des Besuchertelefons werden die Rufsignale und die Videosignale der Kamera an die angerufene Teilnehmerstation durchgeschaltet und auf dem zugeordneten Monitor die Videosignale dargestellt.

Aus der US 4,386,436 ist ein Femsehempfangsgerät bekannt, das als zentrale Steuereinrichtung ausgebildet ist. Der Fernsehempfänger weist darüber hinaus eine Modulatorschaltung auf, mit der Fernsteuerbefehle zur Steuerung externer Geräte auf die Trägerfrequenz des Wechselstromnetzes aufmoduliert werden. Die Übertragung dieser Fernsteuerbefehle erfolgt über das vorhandene Stromversorgungsnetz an die externen zu steuernden Geräte.

Weiterhin ist aus der US-PS 5,428,388 ein System zur Wiedergabe von Ton- und/oder Videosignalen und zur Steuerung von elektronischen Geräten an verschiedenen Orten eines Gebäudes bekannt, insbesondere zur Überwachung von Eingängen mittels Kameras, bei denen die Ton- und Videosignale einer Hausrufstelle leitungslos an eine Empfängerschaltung übertragen werden, die mit einem Fernsehempfangsgerät gekoppelt ist, um die Videosignale auf dem Fernsehbildschirm darstellen zu können. Diese Empfangsstation ist zugleich auch als Sendestation ausgebildet, so daß völlig leitungslos eine Steuerung der Kamera bzw. der Rufstation an der entsprechenden Haustür vorgenommen werden kann. Zum Zwecke der Überwachung sind verschiedene Kameras mit dem zentralen Monitorgerät auf diese Weise verbindbar bzw. aufschaltbar. Darüber hinaus sind tragbare Sprachkontrollgeräte zusätzlich mit der Überwachungszentrale auf gleichem Wege verbindbar. Das Anrufen der einzelnen mit der Zentrale verbindbaren Stationen ist umgekehrt mittels leitungslos übertragener Befehle möglich.

Bei diesem System werden also Ton-, Video- und Femsteuerbefehle drahtlos übertragen, was sehr aufwendige Sende- und Empfangseinheiten notwendig macht und darüber hinaus durch Funkstörungen oder bewußte Aufschaltungen in der Befehlsstruktur Manipulationen unterworfen werden kann.

Ausgehend von den dargestellten Bedürfnissen liegt der Erfindung die Aufgabe zugrunde, ein System zur Wiedergabe von Ton- und/oder Videosignalen in verschiedenen Räumen einer Wohnung oder in einem Haus sowie die Steuerung von elektronischen Geräten von verschiedenen Räumen aus zu ermöglichen, ohne daß in den Räumen redundante Einrichtungen und Apparate oder besondere Verkabelungen vorgesehen sein müssen.

Die Aufgabe löst die Erfindung durch ein System, wie es im Anspruch 1 oder 2 angegeben ist.

Das erfindungsgemäße System besteht aus einer Zentraleinheit, die in einem der Räume vorhanden ist, und Tochtergeräten, die mit dieser Zentraleinheit korrespondieren und in anderen Räumen vorgesehen sind und wahlweise auf Ton- oder Videosignalquellen aufschaltbar sind. Das System bedient sich dabei eines Fernsteuerbusses, der über das vorhandene Stromleitungsnetz realisiert ist, wobei die entsprechenden Steuerbefehle der Wechselspannung des Netzes aufmoduliert werden und am Zentralgerät sowie an den Tochtergeräten und an den zu steuernden Geräten Einrichtungen vorhanden sind, um diese Steuerbefehle ausfiltern zu können, um die adressierten Geräte und die Funktionen zu steuern.

Die Ton- und Videosignale werden hingegen von der Zentrale über einen gesonderten Sender in einem solchen Frequenzbereich und mit einer solchen Intensität als magnetische Wellen abgestrahlt, daß sie in den Räumen aber nur örtlich begrenzt empfangbar sind.

Das System hat den Vorteil, daß für eine Wohn- oder Gebäudeeinheit mit mehreren Räumen nur eine einzige zentrale Empfangseinheit, z.B. für Rundfunk-, Fernseh- und andere über Kabel, Satellit oder Telefonleitung erhaltene Informationen vorhanden zu sein braucht, die dann jedoch nicht nur in dem Raum mittels einer Ortsbedienung selbst, sondern auch von anderen Räumen her angesteuert werden kann und insbesondere auch die Möglichkeit eröffnet, die ausgewählten Informationen nach der Demodulation wieder moduliert in der räumlichen Einheit mittels elektromagnetischer Wellen zu verteilen, um sie von Tochtergeräten empfangen zu können. Dieses System bedient sich dabei eines Rückkanals über das vorhandene Stromverteilungsnetz, das im gesamten Raum vorhanden ist. Es brauchen also für die Steuerung keine zusätzlichen Verkabelungen über Bussysteme vorgesehen zu sein.

Wird z.B. ein Tochtergerät mit einem Infrarotlicht-Fernbedienungssystem ausgerüstet, so kann es in einem zweiten Raum mittels einer Fernbedienung betätigt werden. Das Gerät weist einen Modulator auf und moduliert die Fernsteuerbefehle auf die Wechselspannung des vorhandenen Stromnetzes, so daß sie über dieses an alle angeschlossenen Geräte übertragen wird. Das adressierte Gerät, z.B. das Zentralgerät, empfängt die Steuerbefehle, filtert diese aus und benutzt sie zur Steuerung der entsprechenden Funktion des Gerätes, beispielsweise zum Umschalten des UKW-Empfängers auf einen bestimmten Sender. Das Zentralgerät seinerseits demoduliert das empfangene Signal und überträgt es auf einen Modulator, der seinerseits das Signal moduliert überträgt, so daß das Tochtergerät, das mit einem entsprechend selektiven Empfänger ausgestattet ist, diese Signale empfangen kann. Beispielsweise bietet sich hier der Einsatz von Aktivboxen an, die einen solchen Empfänger aufweisen. Der Benutzer in einem der weiteren Räume, in dem er sich befindet, kann also sofort das gewünschte Programm hören, ohne daß eine besondere Empfangseinheit, also ein vollständiger Rundfunkempfänger, vorhanden sein muß. In gleicher Weise läßt sich das System auch zum Empfang von Fernsehsignalen oder Signalen über eine Telefonleitung nutzen.

Für die Bedienung sieht das System herkömmliche Fernbedienungssysteme vor, wie sie bei unterhaltungselektronischen Geräten, aber auch zur Steuerung von Lampen in einem Raum, bekannt sind. Dies können übliche Infrarotlicht-Fernbedienungssysteme sein. Darüber hinaus ist aber auch eine Ortsbedienung zur Steuerung realisierbar. Diese besteht aus einem an das Stromnetz anschließbaren Fembedienungsgeber, über den sämtliche Funktionen ebenfalls steuerbar sind, so daß die davon ausgehenden Befehle von den Tochtergeräten aber auch von der Zentrale und allen anderen an das Stromversorgungsnetz angeschlossenen elektronischen Geräten empfangen werden. Bei entsprechender Adressierung werden die Befehle von den angesprochenen Geräten ausgelesen. Dies eröffnet darüber hinaus die Möglichkeit, das System auch zur Objektüberwachung zu nutzen, beispielsweise den Türeingang. Kommt ein Besucher und drückt auf den Klingelknopf, so wird damit gekoppelt ein Femsteuersignal über den Leitungsbus an alle Geräte übertragen. Dies ermöglicht der Person, die sich im Haus befindet, die Entgegennahme der damit verbundenen Anwesenheitsnachricht.

Im Falle der direkten Steuerung der Zentrale oder eines Empfangsgerätes für Videosignale kann dabei über die Zentrale ein Videosignal generiert werden, das dem Benutzer in einem anderen Raum oder auch in dem Raum, in dem sich die Zentraleinheit befindet, auf dem Bildschirm signalisiert, daß eine Person an der Haustür um Einlaß nachsucht. Dies kann auch parallel zu einer vorhandenen Signalglocke erfolgen. Der Benutzer kann dann auch im Falle, daß das Tochtergerät eine Sendeeinheit aufweist, oder im Falle, daß die Verbindung nur über die Zentraleinheit hergestellt wird, eine Sprechverbindung mit einer Sprechanlage herstellen, zu welchem Zweck die Sprechanlage der Türeinheit ebenfalls mit einer Sendeeinrichtung für den bidirektionalen Funkverkehr ausgestattet ist, um so die Grundsignale mit der besonderen Frequenz übertragen und empfangen zu können. Selbstverständlich sind darüber hinaus auch Videosignale übertragbar, die von einer Kamera aufgenommen werden, die zu der Haussicherungsanlage gehört, um feststellen zu können, um welche Person es sich handelt, die Einlaß begehrt. Entscheidend ist hier, daß die gleichen Komponenten auch genutzt werden können, um eine solche Objektsicherung bzw. Türsprechanlage benutzen zu können.

Das System ermöglicht darüber hinaus, über den Netzbus die Steuerung von weiteren elektronischen Geräten, z.B. einer Waschmaschine oder eines Elektrokochofens, auf einfache Weise. Wenn z.B. der Benutzer des Systems die Wohnung verläßt, so kann er durch eine Zentralbedienung, ausgelöst über eines der Tochtergeräte oder die Zentrale, die Abschaltung bestimmter oder selektierter oder aller elektronischen Geräte steuern. Er braucht also nicht mehr in der Wohnungseinheit einzelne Geräte abzuschalten. In umgekehrter Weise ist aber auch die zentrale Steuerung dieser Geräte möglich, so daß über die Zentraleinheit beispielsweise Waschmaschinen, Kochherde usw. ein- bzw. ausgeschaltet werden können, ohne daß sich die Person in die einzelnen Räume begeben muß, in denen sich die Geräte befinden. Das System ist also universell auch für die Steuerung von angeschlossenen Geräten einsetzbar, die über den Rückkanal mit der Zentraleinheit und den Tochtergeräten ebenfalls gekoppelt sind.

Vorteilhafte Weiterbildungen des Systems sind in den abhängigen Unteransprüchen in einzelnen angegeben.

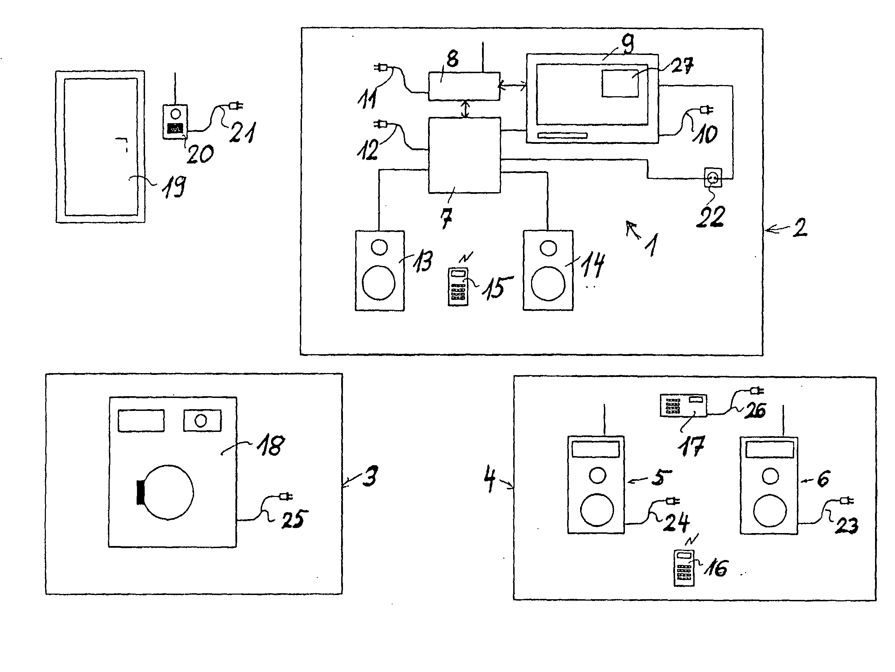

Die Erfindung wird nachfolgend anhand des in der einzigen Figur dargestellten Ausführungsbeispiels ergänzend erläutert.

In der Zeichnung ist in Form von vereinfachten Blockschaltbildern eine räumliche Zuordnung einer zentralen Empfangseinrichtung 1 für den Empfang und die Demodulation von HF-Signalen dargestellt, die in einem Raum 2 einer Wohnungseinheit vorhanden ist, während in dem Raum 4 mindestens ein Tochtergerät vorhanden ist und in dem Raum 3 ein zu steuerndes Gerät. Ferner ist eine Eingangstür 19 mit einer Sprechanlage mit Videokamera 20 eingezeichnet. Die zentrale Empfangseinrichtung 1 besteht aus einem Fernsehempfänger 9 und einer Rundfunkempfangseinrichtung 7 mit daran angeschlossenen Lautsprecherboxen 13 und 14. Die Rundfunkempfangseinheit 7 mit integriertem Fernbedienungsempfänger ist als Zentraleinheit ausgebildet und gestattet den Empfang von Fernbedienungssignalen von dem Infrarot-Fernbedienungsgeber 15 einerseits und den Empfang solcher Signale über den vorhandenen Netzleitungsbus mittels des anschließbaren Kabels 12, der zu diesem Zweck in eine Steckbuchse eingeführt wird. Es sei angenommen, daß das Stromversorgungsnetz ein 230 V Wechselspannungsnetz sei. Auf die Wechselspannung aufmoduliert werden dabei die Fernsteuerbefehle über das vorhandene Stromversorgungsnetz an alle anderen Steckdosen der Wohnungseinheit geleitet, so daß sie an den übrigen Steckdosen bei gleicher Phasenbelegung für die Tochtergeräte 5 und 6 sowie zu steuernde Geräte anliegen. Der HF-Anschluß 22 symbolisiert dabei, daß die zentrale Steuereinrichtung 7 auch die Rundfunksignale von einem Kabelnetz oder aber auch von einer Satellitenantenne empfangen kann, ebenso der Femsehapparat 9, der seinerseits über das Anschlußkabel 10 mit dem Stromversorgungsnetz verbunden ist, so daß auch hierüber die Fernbedienungssignale eingespeist werden. Weiterhin ist ein ebenfalls fernsteuerbarer Sender 8 vorgesehen, der es ermöglicht, ausgewählte demodulierte Tonsignale oder ausgewählte Videosignale von der Audioeinheit der Zentraleinheit bzw. vom Fernsehempfänger 9 auf einen Träger, z.B. 2,4 GHz-Träger, zu modulieren und für die Verteilung abzustrahlen, so daß in der Wohneinheit alle erreichbaren Empfangsgeräte, die auf diese Frequenz abgestimmt sind, das jeweils ausgewählte Programm empfangen können. Diese Sendeeinheit kann aber auch zugleich mit einer Empfangseinheit ausgestattet sein, die es ermöglicht, von einem anderen Sender, z.B. der Türsprecheinheit 20, übertragene Ton- oder Videosignale bei Vorhandensein einer Videokamera zu empfangen. Für diesen Fall ist es zweckmäßig, eine andere Modulationsfrequenz für den Sender in der Türsprechanlage 20 zu verwenden. Die Türsprechanlage 20 ist darüber hinaus über ein Kabel 21 mit dem Stromversorgungsnetz der Wohnungseinheit ebenfalls verbunden, so daß sie in der Lage ist, Fernsteuerbefehle zu empfangen und auch abzugeben, zu welchem Zweck entsprechende Selektionsmittel bzw. Modulationsmittel in der Sprecheinheit ebenfalls vorhanden sind. Die Sende/Empfangseinheit 8 ist zudem ebenfalls über ein Stromversorgungskabel 21 mit einem Netzstromanschluß der Wohnungseinheit verbunden. In einem anderen Raum 4 befinden sich angeschlossene Tochtergeräte, z.B. zwei Aktivboxen 5 und 6, die über Netzstromkabel 23, 24 ebenfalls an das Stromversorgungsnetz angeschlossen sind. Diese Aktivboxen 5 und 6 können zudem Fernbedienungsempfänger für Infrarotlicht-Fernbedienungssysteme aufweisen, so daß sie von einem Fembedienungsgeber 16 steuerbar sind. Wird eine Aktivbox 5 angeschaltet bzw. soll hierüber ein Programm gewählt werden, so wird das Programm durch Betätigen einer Bedienungstaste des Fernbedienungsgebers 16 ausgewählt. Der Fernbedienungsbefehl wird an beide Aktivboxen oder an eine der Aktivboxen übertragen. Der vorhandene Infrarotempfänger demoduliert die Signale. Eine weitere Sendestufe moduliert die Signale auf die Trägerfrequenz des Stromversorgungsnetzes, die diese sodann an alle auf der gleichen Phase liegenden Stromversorgungsanschlüsse überträgt, so daß sie hiervon abgreifbar sind. Die Fernbedienungssignale werden also auch über das Kabel 12 der Zentraleinheit 7 zugeführt, die die empfangenen Signale ausfiltert und in der Zentraleinheit 7 die Steuerfunktion ausführt. Wird beispielsweise "Bayerischer Rundfunk" dadurch angewählt, so erfolgt eine Abstimmung in dem Audioempfangsteil auf diesen Sender. Das demodulierte Tonsignal wird sodann an die Sendestufe 8 abgegeben und über den hauseigenen Sender der Zentraleinheit abgestrahlt, so daß er von dem in den Aktivboxen 5 und 6 enthaltenen Empfänger empfangen werden kann. Die Tonsignale werden sodann wunschgemäß nur in diesem Raum wiedergegeben. Parallel dazu ist auch eine Aufschaltung im Raum 2 möglich, wenn ein entsprechender Fernsteuerbefehl vom Fernbedienungsgeber 15 an die Zentraleinheit 7 abgegeben wird bzw. wenn das System durch Programmierung es erlaubt, auch eine Beschallung zur gleichen Zeit in mehreren Räumen von einem der anderen Tochtergeräte, z.B. 5 oder 6, aus zu steuern. Die Steuerung kann aber auch von einer tochtergeräteunabhängigen Bedienung durchgeführt werden. Diese ist im Raum 4 mit 17 bezeichnet. Diese Fernbedienung ist eine ortsfeste Fernbedienung, die über ein Anschlußkabel 26 ebenfalls mit dem Stromversorgungsnetz verbindbar ist. In ihr werden die Fernsteuerbefehle direkt auf den Wechselspannungsträger aufmoduliert und übertragen und empfangsseitig, d.h. von den angeschlossenen Geräten, dann demoduliert, wenn die Befehle Adressen beinhalten, die den entsprechenden Geräten zugeordnet sind. In gleicher Weise wie bei Bedienung der Fernbedienungsgeber 15 und 16 ist es somit auch möglich, mittels dieses stationären Fernbedienungsgebers z. B. ein Femsehprogramm fernauszuwählen und dann von einem der Tochtergeräte, das ein Fernsehgerät mit entsprechendem Empfangsteil für die hausinteme Sendefrequenz ist, zu empfangen. Das System ermöglicht darüber hinaus auch, aus einem bestimmten Raum das Fernsehgerät 9 direkt anzusprechen, indem dieses einen Empfänger für Fernbedienungsbefehle aufweist, die über das Anschlußkabel 10 eingespeist werden. In diesem Fall wird der zentrale Fernsehempfänger oder nur der Empfangsbaustein dazu benutzt, ein ausgewähltes Programm zu demodulieren und das demodulierte Signal dem Sender 8 zuzuleiten, der es sodann mit einer bestimmten Trägerfrequenz überträgt, die von dem Tochtergerät empfangen werden kann. Die Tochtergeräte brauchen also keine durchstimmbaren Empfangseinheiten aufzuweisen sondern nur eine Empfangseinheit, die auf die hausinterne Verteilfrequenz abgestimmt ist. Dies hat den Vorteil, daß auch z.B. in einem Schlafzimmer der Benutzer sich Filme ansehen kann, die von einem Videogerät, z.B. einem Videoplattenspieler oder einem Videorecorder ausgewählt abgegeben werden, ohne daß er in dem Raum redundant solche Geräte aufstellen muß. Das System ermöglicht ferner beispielweise die Überwachung des Eingangs einer Haustür 19 durch die bereits angesprochene Kamera. Über den Steuerbus, der durch die Netzleitung realisiert ist, ist es möglich, die von der Kamera aufgenommenen Videosignale moduliert mit der besonderen Trägerfrequenz an den Empfänger 8 zu übertragen, der sie dann auf einem Bildschirm z.B. in einem Fenster 27 darstellt. Es ist aber auch möglich, diese Signale über den integrierten Sender in der Baugruppe 8 abzustrahlen und so von einem anderen Tochtergerät empfangen zu können. Bei gleicher Trägerfrequenz der beiden Systeme kann auch der normale Sender, der zur Verteilung von Tonund Videosignalen in der Hausanlage dient, abgeschaltet und nur der Sender der Sprecheinheit 20 auf Sendung geschaltet werden, damit er auch von einem der Tochtergeräte direkt empfangbar ist, z.B. von dem Fernsehempfangsgerät in einem Schlafzimmer. Die Ansteuerung dabei erfolgt stets über den Netzbus, während die Übertragung der Informationssignale über den gesonderten Sender in der Zentraleinheit oder in der Türsprechanlage selbst erfolgt. Das System bietet darüber hinaus die Möglichkeit, auch Geräte direkt zu steuern, was durch eine Waschmaschine, dargestellt im Raum 3, mit dem Bezugszeichen 18 symbolisiert ist. Die Waschmaschine empfängt die Steuerbefehle über das Anschlußkabel 25 ebenfalls von der Zentraleinheit. Die Ansteuerung kann dabei über ortsfeste Bedienungen 17 oder Fembedienungen 16 von einem Raum aus erfolgen. Es ist darüber hinaus möglich, beispielsweise die Programmsteuerung für den Waschvorgang direkt vorzuprogrammieren, zu welchem Zweck die zentrale Steuereinheit 7 beispielsweise Auswahlprogramme zur Verfügung hat, die auf dem Fernsehbildschirm des Fernsehgerätes 9 dargestellt werden, so daß der Benutzer durch Benutzerführung und unter Zuhilfenahme der Fernsteuerung 15 eine Auswahl treffen kann, um das Gerät 18 zu programmieren. Das Gleiche gilt auch für andere in der Wohnungseinheit vorhandene Geräte, wie beispielsweise Kochherd, Backofen usw. Ebenso ist es möglich, daß in den Geräten selbst Zustandsmelder vorhanden sind, die im Format des Fernbedienungscodes Signale ausgeben, die von der zentralen Einheit 7 erfaßt und ausgewertet werden, so daß beispielsweise über die Temperatur eines Tiefkühlschranks eine Aussage abrufbar ist, die dann auf dem Bildschirm des Fernsehgerätes 9 ebenfalls dargestellt werden kann, so daß von einem zentralen Punkt aus auch die Steuer- und Informationssignale gehandhabt werden können.

Die Erfindung ist nicht nur auf das schematisch dargestellte Ausführungsbeispiel beschränkt. Sie läßt sich auf alle Geräte erstrecken, die einen Modulator und/oder einen Filterkreis aufweisen, um Fernsteuerbefehle, die über das vorhandene Stromleitungsnetz in der Raumeinheit verteilt werden, empfangen oder darauf aufmodulieren können, um so über eine Zentraleinheit oder direkt mit einem Tochtergerät derselben in Verbindung treten zu können, um so eine direkte Ansteuerung oder auch eine Zustandsabfrage von jedem beliebigen Ort innerhalb der Wohnungseinheit zu ermöglichen. Darüber hinaus sind durch die gesonderte Abstrahlung der ausgewählten Ton- und Videosignale redundante Geräte nicht erforderlich. Zugleich aber ist es möglich, in allen Räumen, die mit Tochtergeräten ausgestattet sind, Informationen, Programme usw. darzubieten.

## Patentansprüche

1. System zur Wiedergabe von Ton- und/oder Videosignalen und zur Steuerung von elektronischen Geräten in verschiedenen Räumen (2, 3, 4) eines Gebäudes mit einer zentralen Empfangseinrichtung (1, 9) für den Empfang und die Demodulation entsprechender HF-Signale mit einer fernbedienbaren Zentraleinrichtung (7) mit einer Steuereinrichtung zum Auswählen einer Signalquelle aus einer Vielzahl empfangbarer Signalquellen,
- mit einer Sendeeinrichtung (8) zum Modulieren der demodulierten Ton- und/oder Videosignale der ausgewählten Signalquelle auf einen Träger bestimmter Frequenz und leitungslosen Senden der modulierten Signale,
- mit mindestens einem Tochtergerät (5, 6) in einem weiteren Raum mit einer Empfangseinrichtung für die abgestrahlten moduliertenTon- und/oder Videosignale,
- welches Tochtergerät (5, 6) einen Anschluß zur Verbindung mit einem vorhandenen Stromversorgungsnetz (23, 24) aufweist und
- eine Einrichtung zur Modulation von Fernsteuerbefehlen auf die Wechselfrequenz des Stromnetzes,
- welche Einrichtung mit einer ortsfesten Eingabetastatur am Tochtergerät versehen ist,
- das über das Stromversorgungsnetz (12) mit der Zentraleinrichtung (7) gekoppelt ist,
- die einen Empfänger mit mindestens einer Signalauskoppelschaltung für die Femsteuerbefehle aufweist, die die übertragenen Fernsteuerbefehle von der Frequenz des Stromversorgungsnetzes trennt und der Steuereinrichtung der Zentraleinrichtung (7) zuführt und entsprechend dem anliegenden Fernsteuerbefehl eine Funktion in dieser steuert.

2. System zur Wiedergabe von Ton- und/oder Videosignalen und zur Steuerung von elektronischen Geräten in verschiedenen Räumen (2, 3, 4) eines Gebäudes mit einer zentralen Empfangseinrichtung (1, 9) für den Empfang und die Demodulation entsprechender HF-Signale mit einer fernbedienbaren Zentraleinrichtung (7) mit einer Steuereinrichtung zum Auswählen einer Signalquelle aus einer Vielzahl empfangbarer Signalquellen,
- mit einer Sendeeinrichtung (8) zum Modulieren der demodulierten Ton- und/oder Videosignale der ausgewählten Signalquelle auf einen Träger bestimmter Frequenz und leitungslosen Senden der modulierten Signale,
- mit mindestens einem Tochtergerät (5, 6) in einem weiteren Raum mit einer Empfangseinrichtung für die abgestrahlten moduliertenTon- und/oder Videosignale,
- welches Tochtergerät (5, 6) einen Anschluß zur Verbindung mit einem vorhandenen Stromversorgungsnetz (23, 24) aufweist und
- eine Einrichtung zur Modulation von Fernsteuerbefehlen auf die Wechselfrequenz des Stromnetzes,
- welche Einrichtung am Tochtergerät mit einem Empfänger zum Empfang von Femsteuerbefehlen (16) von einem bewegbaren oder stationären Fernbedienungsgeber versehen ist,
- das über das Stromversorgungsnetz (12) mit der Zentraleinrichtung (7) gekoppelt ist,
- die einen Empfänger mit mindestens einer Signalauskoppelschaltung für die Fernsteuerbefehle aufweist, die die übertragenen Fernsteuerbefehle von der Frequenz des Stromversorgungsnetzes trennt und der Steuereinrichtung der Zentraleinrichtung (7) zuführt und entsprechend dem anliegenden Fernsteuerbefehl eine Funktion in dieser steuert.

3. System nach Anspruch 1 oder 2, **dadurch gekennzeichnet, daß** die Zentraleinrichtung (7) einen Sender mit einer Signaleinkoppelschaltung für Fernsteuerbefehle in das Stromversorgungsnetz aufweist, die modulierte Fernsteuerbefehle von Tochtergeräten (5, 6; 18, 20) oder der Zentraleinheit (7) an adressierte Tochtergeräte (5,6; 18,20) überträgt.

4. System nach Anspruch 2, **dadurch gekennzeichnet, daß** die Zentraleinrichtung einen Empfänger für Fernsteuerbefehle von einem Fernbedienungsgeber (15) oder ein ortsfestes Bedienfeld zur Eingabe von Steuerbefehlen aufweist.

5. System nach Anspruch 3, **dadurch gekennzeichnet, daß** die von der Zentraleinheit (7) empfangenen Steuerbefehle, soweit es sich um Steuerbefehle handelt, die zur Steuerung von Tochtergeräten (15, 16; 18, 20) dienen, in einer Sendeeinheit der Frequenz des Netzstromes aufmoduliert an die Tochtereinheit übertragen werden, und daß die Tochtereinheit eine Empfangseinheit zum Empfang und Auswerten der Steuerbefehle aufweist.

6. System nach einem der vorhergehenden Ansprüche, **dadurch gekennzeichnet, daß** eine separate stationäre Fernbedienungseinheit (17) in einem der Räume an ein Stromversorgungsnetz (26) gekoppelt ist, welche Bedienungs- und/oder Anzeigeelemente für die Generierung und/oder Anzeige von Fernsteuerbefehlen für die Steuerung der Zentraleinheit (7) oder einer der Tochtereinheiten (5, 6; 18, 20) aufweist.

7. System nach einem der vorhergehenden Ansprüche, **dadurch gekennzeichnet, daß** die Tochtergeräte (5, 6) Aktivlautsprecherboxen enthalten.

8. System nach einem der Ansprüche 1 bis 6, **dadurch gekennzeichnet, daß** die Tochtergeräte Monitore zum Darstellen von Videosignalen und/oder zur Wiedergabe von Tonsignalen enthalten.

9. System nach einem der Ansprüche 1 bis 6, **dadurch gekennzeichnet, daß** die Tochtergeräte (20) Videokameras enthalten, die einen Sender zum Übertragen modulierter Videosignale auf eine bestimmte Trägerfrequenz aufweisen, und daß die Zentraleinheit einen Empfänger zum Empfang dieser Signale aufweist oder daß eines der Tochtergeräte (20) einen Empfänger zum Empfang dieser Signale aufweist.

10. System nach Anspruch 9, **dadurch gekennzeichnet, daß** die Zentraleinheit oder eines der Tochtergeräte eine Vorzugsschaltung aufweist, die im Falle des Empfangs eines Videosignals von der Videokamera auf Empfang dieses Videosignals umschaltet.

11. System nach Anspruch 9 oder 10, **dadurch gekennzeichnet, daß** die Videokamera Bestandteil einer Türsicherungseinrichtung (20) ist und die Steuerfunktion durch Betätigen desKlingelknopfes oder eines Personenerkennungssignals ein Steuersignal an die Zentraleinheit oder an eines der Tochtergeräte überträgt, um dieses für die Darstellung der aufgenommenen Videosignale zu aktivieren.

12. System nach einem der Ansprüche 1 bis 6 oder 9 bis 11, **dadurch gekennzeichnet, daß** mindestens ein Tochtergerät ein Fernsehgerät mit integrierter Zusatzfunktion zum Empfang von Ton- und/oder Videosignalen, die von der Zentrale moduliert übertragen werden, enthält.

13. System nach einem der Ansprüche 1 bis 6, **dadurch gekennzeichnet, daß** die Tochtergeräte steuerbare Haushaltsgeräte (18) enthalten, die über die zentrale Empfangseinrichtung und/oder ein Tochtergerät ansteuerbar sind und über einen über das Stromversorgungsnetz realisierten Rückkanal zu der zentralen Empfangseinrichtung oder dem Tochtergerät Meßgrößen, Funktionsstände und andere Betriebsparameter überträgt, die diese Informationen optisch und/oder akustisch anzeigt.

14. System nach Anspruch 1 oder 2, **dadurch gekennzeichnet, daß** die Zentraleinheit und/oder das Tochtergerät über einen bidirektionalen Steuerkanal zum Senden und Empfang von Fernbedienungsbefehlen in Verbindung stehen, und daß bestimmte Funktionen oder Folgen von Bedienfunktionen mindestens auf dem Display des Gerätes oder Fernbedienungsgebers anzeigbar sind, von dem die Befehle ausgehen.

15. System nach einem der vorhergehenden Ansprüche, **dadurch gekennzeichnet, daß** die Fernbedienungsgeber (15, 16) Infrarotlicht-Fernbedienungsgeber und/oder magnetische Wellen-Fernbedienungsgeber mit einer Sende- und ggf. einer Empfangseinheit sind.

16. System nach einem der vorhergehenden Ansprüche, **dadurch gekennzeichnet, daß** bei Vorhandensein mehrerer Tochtergeräte in einem Raum mindestens eines dieser Tochtergeräte eine Empfangs- und/oder Sendeeinrichtung für die Übertragung bzw. den Empfang der Ton- und/oder Videosignale mit bestimmter Trägerfrequenz aufweist, und daß die weiteren Geräte über einen Bus mit dem ersten Gerät oder über eine Infrarotübertragungsstrecke mit dem ersten Gerät in Verbindung stehen.

## Claims

1. System for reproducing sound signals and/or video signals and for controlling electronic apparatus in different rooms (2, 3, 4) of a building, with a central receiving device (1, 9) for reception and demodulation of corresponding high-frequency signals with a remotely controllable central device (7) with a control device for selection of a signal source from a plurality of receivable signal sources,
- with a transmitting device (8) for modulation of the demodulated sound signals and/or video signals of the selected signal source on a carrier of defined frequency and conductor-free transmission of the modulated signals,
- with at least one subsidiary apparatus (5, 6) in a further room with a receiving device for the radiated modulated sound signals and/or video signals,
- which subsidiary apparatus (5, 6) has a connection for connecting with a current supply mains (23, 24) which is present and
- a device for modulation of remote control commands on the alternating frequency of the current mains,
- which device is provided with a stationary input keyboard at the subsidiary apparatus,
- which is coupled by way of the current supply mains (12) with the central device (7),
- which comprises a receiver with at least one signal decoupling circuit for the remote control commands, which separates the transmitted remote control commands from the frequency of the current supply mains and feeds them to the control device of the central device (7) and in correspondence with the remote control command which is present controls a function in this.

2. System for reproducing sound signals and/or video signals and for controlling electronic apparatus in different rooms (2, 3, 4) of a building, with a central receiving device (1, 9) for reception and demodulation of corresponding high-frequency signals with a remotely controllable central device (7) with a control device for selection of a signal source from a plurality of receivable signal sources,
- with a transmitting device (8) for modulation of the demodulated sound signals and/or video signals of the selected signal source on a carrier of defined frequency and conductor-free transmission of the modulated signals,
- with at least one subsidiary apparatus (5, 6) in a further room with a receiving device for the radiated modulated sound signals and/or video signals,
- which subsidiary apparatus (5, 6) has a connection for connecting with a current supply mains (23, 24) which is present and
- a device for modulation of remote control commands on the alternating frequency of the current mains,
- which device is provided at the subsidiary apparatus with a receiver for reception of remote control commands (16) from a movable or stationary remote control transmitter,
- which is coupled by way of the current supply mains (12) with the central device (7),
- which comprises a receiver with at least one signal decoupling circuit for the remote control commands, which separates the transmitted remote control commands from the frequency of the current supply mains and feeds them to the control device of the central device (7) and in correspondence with the remote control command which is present controls a function in this.

3. System according to claim 1 or 2, **characterised in that** the central device (7) comprises a transmitter with a signal coupling circuit for remote control commands into the current supply mains, which transmits modulated remote control commands from subsidiary apparatus (5, 6; 18, 20) or the central unit (7) to addressed subsidiary apparatus (5, 6; 18, 20).

4. System according to claim 2, **characterised in that** the central device comprises a receiver for remote control commands from a remote control transmitter (15) or a stationary control panel for input of control commands.

5. System according to claim 3, **characterised in that** the control commands received from the central unit (7) insofar as they are control commands which serve for control of subsidiary apparatus (15, 16; 18, 20), are transmitted, modulated to the frequency of the mains current, in a transmitting unit to the subsidiary unit and that the subsidiary unit comprises a receiving unit for reception and evaluation of the control commands.

6. System according to one of the preceding claims, **characterised in that** a separate stationary remote control unit (17) in one of the rooms is coupled to a current supply mains (26), which comprises control and/or indicating elements for the generation and/or indication of remote control commands for control of the central unit (7) or of the subsidiary units (5, 6; 18, 20).

7. System according to one of the preceding claims, **characterised in that** the subsidiary apparatus (5, 6) contain active loudspeaker boxes.

8. System according to one of claims 1 to 6, **characterised in that** the subsidiary apparatus contain monitors for representation of video signals and/or for reproduction of sound signals.

9. System according to one of claims 1 to 6, **characterised in that** the subsidiary apparatus (20) contain video cameras, which comprise a transmitter for transmission of modulated video signals on a specific carrier frequency, and that the central unit comprises a receiver for reception of these signals or that one of the subsidiary apparatus (20) comprises a receiver for reception of these signals.

10. System according to claim 9, **characterised in that** the central unit or one of the subsidiary apparatus comprises a priority circuit which in the case of reception of a video signal from the video camera switches over to reception of this video signal.

11. System according to claim 9 or 10, **characterised in that** the video camera is a component of a door security device (20) and the control function by actuation of the bell button or a person recognition signal transmits a control signal to the central unit or to one of the subsidiary apparatus in order to activate this for representation of the received video signals.

12. System according to one of claims 1 to 6 or 9 to 11, **characterised in that** at least one subsidiary apparatus contains a television receiver with integrated auxiliary function for reception of sound signals and/or video signals which are transmitted in modulated form from the central station.

13. System according to one of claims 1 to 6, **characterised in that** the subsidiary apparatus contain controllable domestic appliances (18), which are controllable by way of the central receiving device and/or a subsidiary apparatus and transmit by way of a return channel, which is realised by way of the current supply mains, measuring magnitudes, functional states and other operating parameters to the central receiving device or to the subsidiary apparatus, which optically and/or acoustically indicates these data.

14. System according to claim 1 or 2, **characterised in that** the central unit and/or the subsidiary apparatus are disposed in connection by way of a bidirectional control channel for transmitting and receiving remote control commands and that specific functions or sequences of control functions can be displayed at least on the display of the apparatus or remote control transmitter, from which the commands emanate.

15. System according to one of the preceding claims, **characterised in that** the remote control transmitters (15, 16) are infrared-light remote control transmitters and/or magnetic-wave remote control transmitters with a transmission unit and optionally a receiving unit.

16. System according to one of the preceding claims, **characterised in that** in the case of presence of several subsidiary apparatus in one room at least one of these subsidiary apparatus comprises a receiving device and/or transmission device for transmission or reception of sound signals and/or video signals with defined carrier frequency and that the further apparatus are disposed in connection by way of a bus with the first apparatus or by way of an infrared transmission path with the first apparatus.

## Revendications

1. Système pour la reproduction de signaux audio et/ou vidéo et pour la commande d'appareils électroniques dans plusieurs pièces (2, 3, 4) d'un bâtiment, avec un dispositif récepteur central (1, 9) pour la réception et la démodulation de signaux HF correspondants, avec un dispositif central pouvant être télécommandé (7) avec un dispositif de commande pour la sélection d'une source de signal parmi une pluralité de sources de signal pouvant être captées,
- avec un dispositif émetteur (8) pour la modulation des signaux audio et/ou vidéo démodulés de la source de signal sélectionnée sur une porteuse de fréquence déterminée et pour la transmission sans fil des signaux modulés,
- avec au moins un appareil subordonné (5, 6) dans une autre pièce muni d'un dispositif récepteur pour les signaux audio et/ou vidéo modulés émis,
- lequel appareil subordonné (5, 6) présente une connexion pour le raccordement à un réseau d'alimentation électrique (23, 24) existant, et
- un dispositif pour la modulation de commandes à distance sur la fréquence de courant alternatif du réseau électrique,
- lequel dispositif est pourvu d'un clavier de saisie fixe sur l'appareil subordonné,
- qui est couplé au dispositif central (7) par le réseau d'alimentation électrique (12),
- qui présente un récepteur avec au moins un circuit de découplage du signal pour les commandes, qui sépare les commandes à distance transmises de la fréquence du réseau d'alimentation électrique et les transmet au dispositif de commande du dispositif central (7) et commande une fonction de celui-ci selon la commande à distance reçue.

2. Système pour la reproduction de signaux audio et/ou vidéo et pour la commande d'appareils électroniques dans plusieurs pièces (2, 3, 4) d'un bâtiment avec un dispositif récepteur central (1, 9) pour la réception et la démodulation de signaux HF correspondants, avec un dispositif central pouvant être télécommandé (7) avec un dispositif de commande pour la sélection d'une source de signal parmi une pluralité de sources de signal pouvant être captées,
- avec un dispositif émetteur (8) pour la modulation des signaux audio et/ou vidéo démodulés de la source de signal sélectionnée sur une porteuse de fréquence déterminée et pour la transmission sans fil des signaux modulés,
- avec au moins un appareil subordonné (5,6) dans une autre pièce muni d'un dispositif récepteur pour les signaux audio et/ou vidéo modulés émis,
- lequel appareil subordonné (5, 6) présente une connexion pour le raccordement à un réseau alimentation électrique (23, 24) existant, et
- un dispositif pour la modulation de commandes à distance sur la fréquence de courant alternatif du réseau électrique,
- lequel dispositif est pourvu sur l'appareil subordonné d'un récepteur servant à la réception de commandes à distance (16) d'un émetteur de télécommande mobile ou fixe,
- qui est couplé au dispositif central (7) par le réseau alimentation électrique (12),
- qui présente un récepteur avec au moins un circuit de découplage du signal pour les commandes, qui sépare les commandes à distance transmises de la fréquence du réseau d'alimentation électrique et les transmet au dispositif de commande du dispositif central (7) et commande une fonction de celui-ci selon la commande à distance reçue.

3. Système selon la revendication 1 ou 2, **caractérisé en ce que** le dispositif central (7) comprend un émetteur avec un circuit de découplage des signaux pour les commandes à distance, qui transmet les commandes à distance modulées des appareils subordonnés (5, 6 ; 18, 20) ou de l'unité centrale (7) à des appareils subordonnés (5, 6 ; 18, 20) adressés.

4. Système selon la revendication 2, **caractérisé en ce que** le dispositif central comprend un récepteur pour les commandes à distance d'un émetteur de télécommande (15) ou d'un tableau de commande fixe servant à la saisie des commandes.

5. Système selon la revendication 3, **caractérisé en ce que** les commandes reçues par l'unité centrale (7), s'il s'agit de commandes servant à commander des appareils subordonnés (15, 16 ; 18, 20), sont modulées dans une unité émettrice à la fréquence du réseau électrique et transmises à l'unité subordonnée, et **en ce que** l'unité subordonnée comprend une unité réceptrice pour la réception et l'interprétation des commandes.

6. Système selon l'une ou l'ensemble des revendications précédentes, **caractérisé en ce qu'**une unité de télécommande (17) fixe séparée est couplée dans l'une des pièces à un réseau d'alimentation électrique (26), laquelle unité présente des éléments de commande et/ou d'affichage pour la génération et/ou l'affichage de commandes à distance pour la commande de l'unité centrale (7) ou de l'une des unités subordonnées (5, 6 ; 18, 20).

7. Système selon l'une ou l'ensemble des revendications précédentes, **caractérisé en ce que** les appareils subordonnés (5, 6) comprennent des enceintes acoustiques actives.

8. Système selon l'une ou l'ensemble des revendications 1 à 6, **caractérisé en ce que** les appareils subordonnés comprennent des moniteurs pour la visualisation de signaux vidéo et/ou pour la reproduction de signaux audio.

9. Système selon l'une ou l'ensemble des revendications 1 à 6, **caractérisé en ce que** les appareils subordonnés (20) comprennent des caméras vidéo qui présentent un émetteur pour la transmission de signaux vidéo modulés à une fréquence de porteuse donnée, et **en ce que** l'unité centrale présente un récepteur pour la réception de ces signaux, ou **en ce que** l'un des appareils subordonnés (20) présente un récepteur pour la réception de ces signaux.

10. Système selon la revendication 9, **caractérisé en ce que** l'unité centrale ou l'un des appareils subordonnés présente un circuit de préférence qui commute, en cas de réception d'un signal vidéo de la caméra vidéo, sur la réception de ce signal vidéo.

11. Système selon la revendication 9 ou 10, **caractérisé en ce que** la caméra vidéo fait partie d'une installation de sécurité de porte (20) et la fonction de commande transmet, par l'actionnement du bouton de sonnette ou d'un signal de détection de personne, un signal de commande à l'unité centrale ou à l'un des appareils subordonnés, afin d'activer celui-ci pour la visualisation des signaux vidéo captés.

12. Système selon l'une ou l'ensemble des revendications 1 à 6 ou 9 à 11, **caractérisé en ce qu'**un appareil subordonné au moins est un téléviseur avec une fonction supplémentaire intégrée pour la réception de signaux audio et/ou vidéo transmis sous forme modulée par le central.

13. Système selon l'une ou l'ensemble des revendications 1 à 6, **caractérisé en ce que** les appareils subordonnés comprennent des appareils ménagers (18) pouvant être commandés, qui peuvent être commandés par le dispositif récepteur central et/ou un appareil subordonné et des grandeurs de mesure, des états de fonctionnement et autres paramètres d'exploitation sont transmis par un canal de retour réalisé par le réseau d'alimentation électrique au dispositif récepteur central ou à l'appareil subordonné qui les présente sous forme visuelle et/ou sonore.

14. Système selon la revendication 1 ou 2, **caractérisé en ce que** l'unité centrale et/ou l'appareil subordonné communiquent par un canal de commande bidirectionnel pour l'émission et la réception de commandes à distance, et **en ce que** certaines fonctions ou séquences de fonctions de commande peuvent être affichées au moins sur l'écran de appareil ou de l'émetteur de télécommande duquel partent les commandes.

15. Système selon l'une ou l'ensemble des revendications précédentes, **caractérisé en ce que** les émetteurs de télécommande (15, 16) sont des émetteurs de télécommande à infrarouges et/ou à ondes magnétiques avec une unité d'émission et éventuellement un récepteur.

16. Système selon l'une ou l'ensemble des revendications précédentes, **caractérisé en ce que** lorsqu'il existe plusieurs appareils subordonnés dans une même pièce, l'un au moins de ces appareils subordonnés présente un dispositif récepteur et/ou émetteur pour la transmission ou la réception de signaux audio et/ou vidéo à une fréquence de porteuse donnée, et **en ce que** les autres appareils communiquent avec le premier appareil par l'intermédiaire d'un bus ou d'un trajet de transmission à infrarouges.
